Europäisches Patentamt

European Patent Office

Office européen des brevets

(19)

(11) **EP 0 774 734 A2**

(12) # EUROPEAN PATENT APPLICATION

(43) Date of publication:
**21.05.1997 Bulletin 1997/21**

(51) Int Cl.[6]: **G06T 5/20**

(21) Application number: **96308209.4**

(22) Date of filing: **13.11.1996**

(84) Designated Contracting States:
**DE FR GB IT SE**

(30) Priority: **14.11.1995 IL 11598595**

(71) Applicant: **ELOP ELECTRO-OPTICS INDUSTRIES LTD.
Rehovot 76111 (IL)**

(72) Inventors:
• **Menn, Anatoly
Haifa 33852 (IL)**

• **Miller, Robert
Modiin (IL)**

(74) Representative: **Baker, Colin John et al
Withers & Rogers,
4 Dyer's Buildings,
Holborn
London EC1N 2JT (GB)**

(54) **System and method for computerized archiving**

(57) The invention provides a system for computerized archiving and expertizing of microscopic images, including a microscope equipped with a television camera connectable to computer means for image analysis and eventual acquisition of at least some of the images analyzed; an XY stage for the mounting thereon of a specimen to be analyzed, movement of the stage being controllable at least via the computer means to facilitate scanning of the specimen by the television camera, along a predetermined trajectory and in predetermined steps, and means for analyzing objects found in the images according to predetermined criteria and, only when the objects are found to contain significant information, to acquire and store these images for future use.

Fig.1.

EP 0 774 734 A2

## Description

### Field of the Invention

The present invention relates to a system and a method for computerized archiving, and more particularly for computerized microscopy for biological and medical applications.

### Background of the Invention

The system and method of the invention are best explained using the representative example of blood cell analysis.

Usually in blood cell analysis, a drop of blood taken from a patient is smeared on a glass slide and stained in some standard manner familiar to those who are skilled in this field. Then the smear is observed through the microscope by a doctor or a laboratory technician. During observation, the smear is moved on the microscope table in the X and Y directions, with a great many fields of view to be examined before good test statistics are achieved. Normally, about one hundred white blood cells have to be found and identified. Since such a cell appears in each field of view, this means that hundreds of patterns have to be traced and observed through the microscope until the smear test is completed.

The results of such testing are at present usually summarized in a report, but the images which were analyzed cannot be recorded. Of course, the smear itself can be stored, but treatment of hundreds of thousands of smears becomes unpracticable.

There exist a number of systems facilitating computerization of microscopic images. Such systems comprise a television camera attached to the microscope and connected to a PC via a video card which acts as a frame grabber. Images from such microscopes are observed on monitors located either in the vicinity of the microscope or, in the last years, are transferred (in real time) over long distances ("Video Conferencing"). Due to high resolution requirements, a single video image consists normally of about 250.000 pixels, which have to be memorized. It is thus seen that storing the data originating in even a single blood smear requires too much memory, thus making archiving of microscopic images practically unfeasible. This in fact is the reason why so far there exists no system permitting the archiving of microscopic images of smears and the establishing of data bases of smears from patients treated in hospitals or medical centers.

A system which may be regarded as representative of the existing prior art is disclosed in U.S. Patent 4,965,725. The system was designed for the automatic screening of Pap smears. The smear is automatically searched by two optical systems: first by low power optics, in order to find areas of cellularity, and then by a medium power lens interfaced to the neural network computer, which selects 64 tiles (areas) where suspicious cells and/or epithelial fragments are discovered. Selected tiles are displayed on the high resolution monitor. The system is designed for cervical cancer diagnosis only. It is a fully automatic system, and there is no possibility of intervention of a doctor, either in the scanning of the smear, or in choosing the zones of interest.

It is thus one of the objects of the present invention to provide a system that, in recognition of the fact that only a small fraction of the information contained in a visualized specimen is of importance for diagnostic purposes, will, while scanning the entire specimen, automatically detect and acquire only that particular fraction.

It is a further object of the invention to also permit manual scanning to allow the expert to retrace the scanning track for verification of the information acquired or for adding further suspicious details.

It is a still further object of the invention to provide an autofocusing facility to ensure data acquisition at conditions of optimal focus.

### Summary of the Invention

According to the invention, the above objectives are achieved by providing a system for computerized archiving and expertizing of microscopic images, comprising a microscope equipped with a television camera connectable to computer means for image analysis and eventual acquisition of at least some of the images analyzed; an XY stage for the mounting thereon of a specimen to be analyzed, movement of said stage being controllable at least via said computer means to facilitate scanning of said specimen by said television camera, along a predetermined trajectory and in predetermined steps, and means for analyzing objects found in said images according to predetermined criteria and, only when said objects are found to contain significant information, to acquire and store these images for future use.

The invention also provides a method for computerized archiving and expertizing of microscopic image pixels of a specimen, comprising the steps of providing a microscope equipped with a television camera connectable to computer means; using said television camera to scan said specimen along a predetermined trajectory and in predetermined steps; feeding the output signals of said television camera to said computer means; using said computer means to calculate the relationship

$$W = (I_R\text{-}I_B)/(I_G\text{-}I_B)$$

wherein:

W = ratio of the three primary color components R, G, B of each of said image pixels, and
$I_R$, $I_B$ and $I_G$ = intensities of the R, G, B components of said pixel;
comparing the value of W thus obtained with a pre-

determined threshold value $W_t$, whereby $W > W_t$ indicates that a pixel belongs to an object of possible interest; determining whether a number of neighboring pixels with $W > W_t$ form an area the size of which, in both the X direction $I_x$ and the Y direction $I_y$, exceeds a predetermined value L, in which case said object is definitely an object of interest; defining a frame around said object of interest, with $I_R$, $I_G$ and $I_B$ of each pixel in said frame being memorized as a single file; arranging a number of such files as an array of frames, each frame comprising an object of interest; displaying said array on the monitor of said computer means for visual examination, verification and possible correction, and introducing said array into a data bank for future retrieval and use.

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

**Brief Description of the Drawings**

In the drawings:

Fig. 1 is a general view of the system according to the invention;
Fig. 2 schematically shows the dual-drive mechanical stage of the microscope (motorized and manual);
Fig. 3 illustrates the scanning track of a test smear;
Fig. 4 is an example of the field of view with a detected object of interest, and
Fig. 5 shows an example of a gallery of white blood cells just before archiving.

**Detailed Description of Preferred Embodiments**

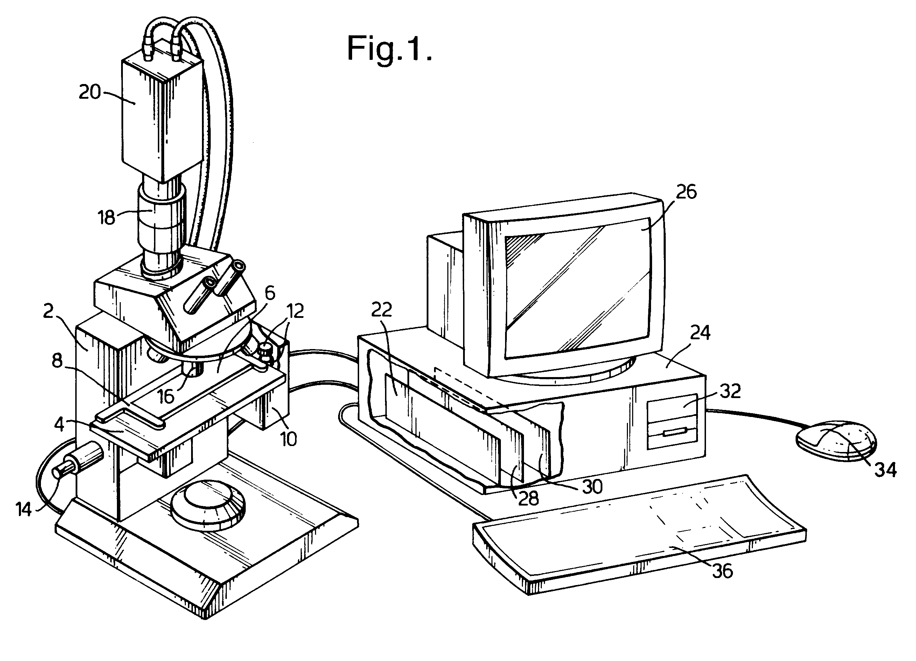

Referring now to the drawings, there is seen in Fig. 1 a microscope 2 with a microscope stage 4 on which is disposed a smear slide 6 clamped onto a mechanical stage 8. The latter is connected via a transmission 10 to two stepping motors (not shown), which provide the required XY- movement. Also provided are easily accessible knobs 12 for manual control of the slide movement.

A third stepping motor (not shown) is connected to the fine-focusing spindle of the microscope and, when driven, provides autofocusing. The other side of mechanism 14 remains free and is used for manual focusing of the image.

The image created by microscope objective 16 is projected by relay lens 18 onto the sensor of television camera 20 (a CCD camera, or any other video camera). The output signal of camera 20 is fed to frame grabber 22 installed in computer 24, with the current image displayed in real time on monitor 26. On the same monitor are also displayed the processed images or the created gallery of automatically detected cells.

All three motors are controlled by motor control card 28. Also installed in the computer is a modem 30 for transmitting either raw or processed images, or the gallery created, via telephone network over long distances for expertizing, teaching, consulting, or any other purpose. Information for archiving (data base) is stored either on hard disk 32, on an optical disk, or on other high-volume storage media. The entire system is operated through standard mouse 34 or keyboard 36.

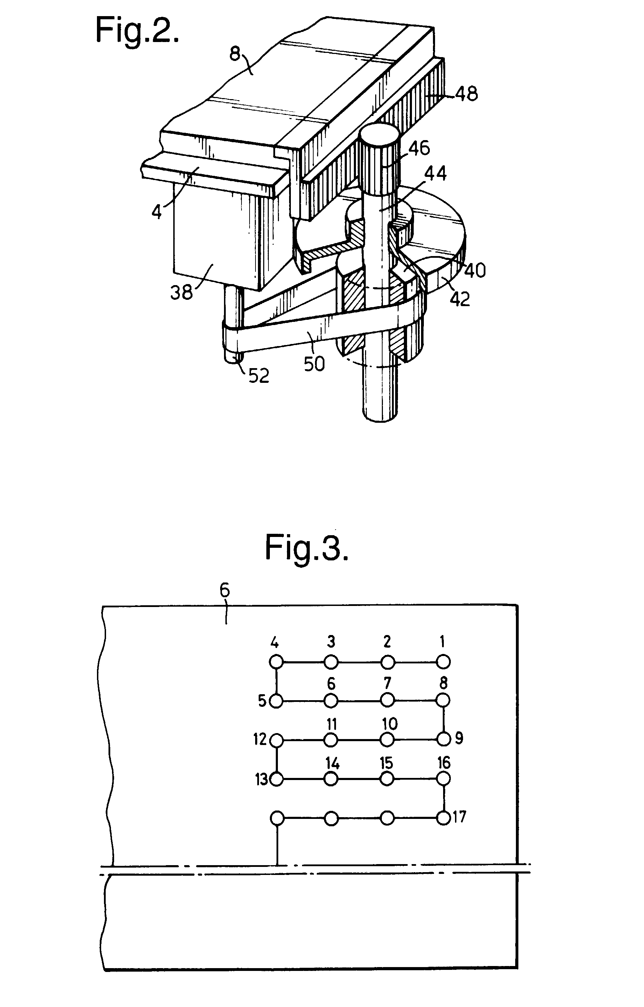

The archiving system requires the use of a dual-drive stage (motorized and manual), one possible embodiment of which is represented in Fig. 2. For simplicity, Fig. 2 shows only a single axis drive.

A first stepping motor 38 (the motor for the other axis drive is not shown) is attached to stage 4, on which mechanical stage 8 moves. A pulley 40 and a wheel 42 are keyed to shaft 44 of gear pinion 46, which engages rack 48 and, when rotated, causes the mechanical stage 8 to move in the direction of one of the axes. A friction transmission, advantageously in the form of a belt 50, transmits the torque from motor shaft 52 to pulley 40 when stepping motor 38 is activated. Pinion 46, in other words, mechanical stage 8, can be actuated also by manually rotating wheel 42. This is facilitated by programming motor control card 28 in such a way that, after completing the stepping motor controlled stage movement between any two adjacent target positions, voltage supply to motor 38 and to the second motor is cut off, thereby eliminating motor torque and enabling stage 8 to be moved by manual rotation of pinion 46 via wheel 42.

As voltage supply to the stepping motors is effected by computer 24 only, transition from motorized to manual drive of stage 8 is very fast.

Fig. 3 schematically illustrates the track along which smear slide 6 is scanned. Starting from position 1 (first field of view analyzed by computer 24), the system moves into the objective field of view the area marked 2, then 3, 4, and so on. To realize the scanning scheme of Fig. 3, slide 6 is automatically moved in the X-direction from position 1 to position 4 (via postions 2 and 3), then, in the Y-direction from position 4 to position 5, then again in the X-direction from position 5 to position 8 (via positions 6 and 7), and so on. At each position, the view is imaged on the sensor of television camera 20 and immediately processed by computer 24.

It will be appreciated that Fig. 3 gives only one example of a tracking strategy. Any other strategy can be chosen, programmed and carried out by motor control card 28.

Tracking can be stopped, if necessary, at any position. Also, by memorizing the number and sequence of steps performed by each of the two stepping motors (one for the X, the other for the Y direction) at each transition from one position to another, a full record of the tracking trajectory is created and stored. By reversing the polarity of the voltage supplied to the stepping motors, the tracking trajectory can be retraced field by field, a very important feature essential for verification and final editing prior to archiving.

Since the quality of archived images should be as high as possible, the system provides an autofocusing feature which is activated if, and only if, an object of interest is found in the field of view. There exist several methods for autofocusing. The one proposed by the present invention is based on processing of the image of the object of interest and its close surroundings: after an object of interest is detected and a frame around it is determined, the system activates the third stepping motor. This motor, in a "hunting" action, moves the stage 4 in the Z direction (vertically) several steps up and several steps down. At each vertical position $Z_i$, the contrast $C(Z_i)$ of the image is computed as the ratio

$$(I_{max} - I_{min})/(I_{max} + I_{min})$$

wherein:
$I_{max}$ and $I_{min}$ = the maximum and the minimum intensities registered in the processing frame.

Comparing $C(Z_i)$ for all chosen $Z_i$, the system finds the maximum value C and moves to the corresponding level Z' (coarse focusing). After that, the system repeats the operation at smaller steps along the Z-axis, starting from Z' in order to obtain still better focusing, finds the final value Z", and moves stage 4 to this final level (fine focusing). Activating autofocusing only for small frames and only for those fields of view where an object of interest is present, significantly reduces the processing time.

While tracking a smear, the system analyzes each field of view, looking for an object of interest. Detection of an object is based on some distinguishing features of an object image.

In the present example (white blood cells), the main feature is the ratio between the three primary color components (R, G, B). After staining the smear, a white cell is detected as a particle with an intensely violet color component. Therefore, detection is based on computing the ratio $W = (I_R - I_B)/(I_G - I_B)$ for each pixel of the image. $I_R$, $I_B$ and $I_G$ represent the respective intensities of a pixel's R, G, B components. If W is greater than $W_t$ (the predetermined threshold value), then the pixel might belong to an object of interest.

After that computation, the neighboring pixels are examined and if the number of pixels with $W > W_t$ creates an area the size of which, in both the X and Y directions $l_x$ and $l_y$, is greater than a predetermined value L (the minimal size of a white blood cell), then the object is defined as a white blood cell.

It should be noted that in practice, for better detection, normalization of the pixel intensity with respect to that of a white area (zones with no particle) is required. It facilitiates detection which is independent of illumination conditions in the field of view.

In a manner similar to that described herein, based on segmentation of the images and the typical color and size of objects of interest, other objects of interest can also be determined and detected, such as, e.g., red blood cells, thrombocytes, platelets, bacteria, etc.

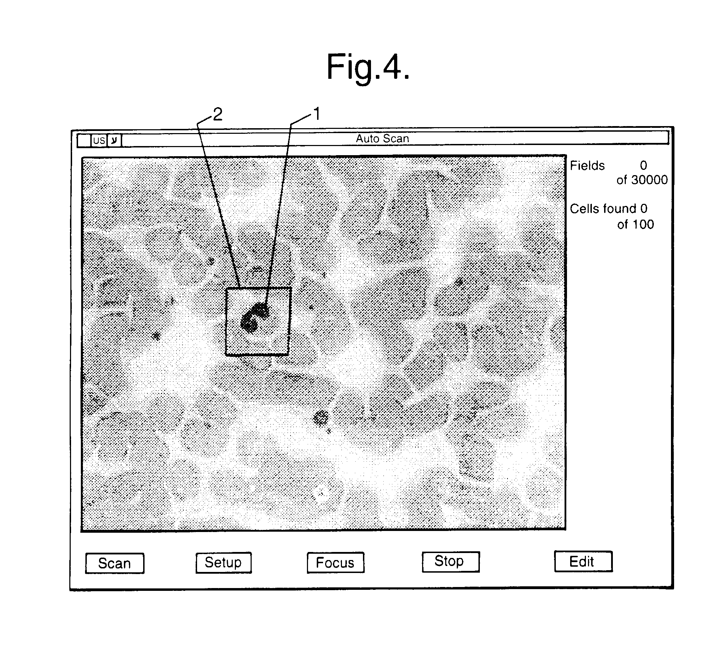

Fig. 4 shows a field of view wherein the object 54 is the white blood cell detected by the system. At the next step, the system defines the frame 56 around object 54. Intensities of three primary colors for each pixel inside frame 56 are memorized as a single file. This file is enumerated for further identification.

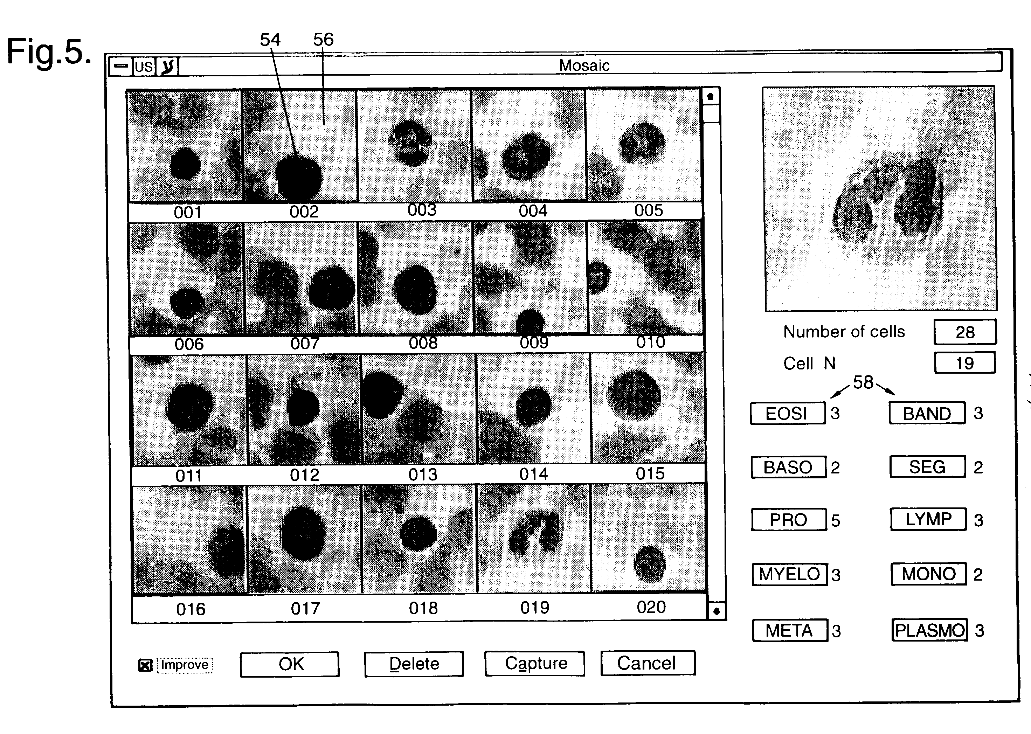

After completing the smear scan during which the system has memorized a number of files, the memorized files are then arranged as an array or gallery of frames 56, each of them comprising an object of interest (Fig. 5). The gallery is then displayed on monitor 26 for visual examination by an expert who can decide whether the gallery is sufficiently representative, or not. For better scrutiny, any individual object 54 can be selected and further magnified, as was done for frame No. 019 (see insert in the upper right-hand corner of Fig. 5).

After verification and, if necessary, classification of the objects into different groups, a manual operation assisted by interactive software (see buttons 58 in the lower right-hand corner of Fig. 5), the gallery is introduced into the data base for archiving.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

**Claims**

1. A system for computerized archiving and expertizing of microscopic images, comprising:

a microscope equipped with a television camera connectable to computer means for image analysis and eventual acquisition of at least some of the images analyzed;

an XY stage for the mounting thereon of a specimen to be analyzed, movement of said stage being controllable at least via said computer means to facilitate scanning of said specimen by said television camera, along a predetermined trajectory and in predetermined steps, and

means for analyzing objects found in said images according to predetermined criteria and, only when said objects are found to contain significant information, to acquire and store these images for future use.

2. The system as claimed in claim 1, wherein said XY stage is a dual drive stage, being optionally controllable either by motor power via said computer means, or manually.

3. The system as claimed in claim 1, wherein said analyzing means arrange said information-carrying images in arrays.

4. The system as claimed in claim 1, wherein said scanning trajectory is retraced for verification and/or addition to, and/or partial deletion of, said images as grouped in said arrays.

5. The system as claimed in claim 1, wherein said microscope is provided with an autofocus capability.

6. A method for computerized archiving and expertizing of microscopic image pixels of a specimen, comprising the steps of:

providing a microscope equipped with a television camera connectable to computer means;
using said television camera to scan said specimen along a predetermined trajectory and in predetermined steps;
feeding the output signals of said television camera to said computer means; using said computer means to calculate the relationship

$$W = (I_R - I_B)/(I_G - I_B)$$

wherein:

W = ratio of the three primary color components R, G, B of each of said image pixels, and
$I_R$, $I_B$ and $I_G$ = intensities of the R, G, B components of said pixel;

comparing the value of W thus obtained with a predetermined threshold value $W_t$, whereby $W > W_t$ indicates that a pixel belongs to an object of possible interest;

determining whether a number of neighboring pixels with $W > W_t$ form an area the size of which, in both the X direction $I_x$ and the Y direction $I_y$, exceeds a predetermined value L, in which case said object is definitely an object of interest;
defining a frame around said object of interest, with $I_R$, $I_G$ and $I_B$ of each pixel in said frame being memorized as a single file;
arranging a number of such files as an array of frames, each frame comprising an object of interest;
displaying said array on the monitor of said computer means for visual examination, verification and possible correction, and
introducing said array into a data bank for future retrieval and use.

7. The method as claimed in claim 6, further comprising the step of manually controlling the movement of said XY stage.

Fig.1.

# Fig.2.

# Fig.3.

# Fig.4.

## Fig.5.

Mosaic

| | | | | |
|---|---|---|---|---|
| 001 | 002 | 003 | 004 | 005 |
| 006 | 007 | 008 | 009 | 010 |
| 011 | 012 | 013 | 014 | 015 |
| 016 | 017 | 018 | 019 | 020 |

54   56

Number of cells    28

Cell N    19

58

| EOSI | 3 | BAND | 3 |
|---|---|---|---|
| BASO | 2 | SEG | 2 |
| PRO | 5 | LYMP | 3 |
| MYELO | 3 | MONO | 2 |
| META | 3 | PLASMO | 3 |

☒ Improve    OK    Delete    Capture    Cancel

EP 0 774 734 A2